Europäisches Patentamt

European Patent Office

Office européen des brevets

(11) Publication number: **0 173 905**
**A2**

## (12) EUROPEAN PATENT APPLICATION

(21) Application number: **85110350.7**

(22) Date of filing: **20.08.85**

(51) Int. Cl.⁴: **G 06 F 12/06**

(30) Priority: **07.09.84 US 648541**

(43) Date of publication of application:
**12.03.86 Bulletin 86/11**

(84) Designated Contracting States:
**DE FR GB NL**

(71) Applicant: TEKTRONIX, INC.
Tektronix Industrial Park D/S Y3-121 4900 S.W. Griffith
Drive P.O. Box 500
Beaverton Oregon 97077(US)

(72) Inventor: Sullivan, James P.
3644 S.E. Gladstone Street
Portland Oregon 97202(US)

(74) Representative: Strasse, Joachim, Dipl.-Ing. et al,
Strasse und Stoffregen European Patent Attorneys
Zweibrückenstrasse 17
D-8000 München 2(DE)

(54) Dynamic address assignment system.

(57) For a computer system having peripheral devices coupled to a common bus through interface devices transmitting and receiving messages containing an address code matching a stored address code, a dynamic address assignment system stores a unique address code in each interface device following system startup. On system startup each interface device stores a type number and an adjustable serial number, type numbers for peripheral devices of the same type being identical while serial numbers for all peripheral devices of the same type are adjusted to different values. A master controller transmits to all peripheral devices a series of universally addressed count commands. Each interface device counts the count commands and, when the count reaches a poll number determined by the unique combination of stored type and serial numbers, requests and obtains a unique address code from the host computer. The interface device thereafter stores and uses the unique address code in transmitting and receiving messages on the bus.

0173905

# DYNAMIC ADDRESS ASSIGNMENT SYSTEM

## Background of the Invention

The present invention relates in general to computer systems employing a common serial data bus to provide communication links between a host computer and more than one peripheral device and particularly to a method and apparatus for dynamically assigning addresses to each peripheral device on the bus.

When more than one peripheral device, such as a keyboard, joystick or digitizer must communicate with a host computer through a common serial data bus, the computer must be able to tell which peripheral device has sent any particular data received by the computer over the bus. Also when the computer sends data to some peripheral device on the bus, the selected device must know that the data is intended for it. All other peripheral devices must know that the data should be ignored. In the prior art it is common to establish a data transmission protocol whereby all data transmissions to or from peripheral devices contain peripheral addressing information, usually at the beginning of the transmission. Each peripheral device is assigned a unique address and incorporates that address into every data transmission to the computer. Likewise the computer incorporates the unique address of the selected peripheral device in every transmission to each peripheral. Each peripheral device is designed to respond to data transmissions containing only its unique address code and to ignore others.

In the prior art, the unique address of each peripheral device is typically established through adjustment of hardware in the device such as, for instance, through setting switches or through data stored in a

- 2 -                                              0173905

read only memory (ROM) contained in each device.  A communication controller in each peripheral device is then programmed to respond only to messages containing addresses matching the number stored in ROM or set by the switches.  One disadvantage of using a ROM in each peripheral device is that the ROM must be different for each device.  If, for instance, two keyboards are connected to the same bus, the ROM in one keyboard must be altered.

Use of switches in each peripheral device makes it easier for a user to give each device a unique address.  However a large number of switches must be used if the address uses several bits to accommodate a large number of peripheral devices.  Requiring a user to set a large number of switches accurately presents an opportunity for human error.

It would be advantageous if peripheral devices could be added to a serial bus without the need for changing ROMs in any peripheral device or without the need for setting the entire device address in switches in the peripheral devices.

## Summary of the Invention

The present invention is a method and apparatus for dynamically addressing a plurality of peripheral devices communicating with a central or "host" computer over a single serial data bus.  Each peripheral device contains a remote universal peripheral interface device (PID) and a set of four switches.  The host computer is connected to a master controller through a bidirectional parallel port.  The master controller and all PIDs each have a serial port connected to the serial data bus.  Thus all information passing between the host computer and a peripheral device passes through the master and corresponding PIDs.

Each PID contains a ROM storing a number representing the peripheral type. The peripheral type number stored by, for instance, a keyboard PID will differ from the peripheral type number stored in a joystick PID. However the type number stored in the PIDs of two identical keyboards will be identical.

The four switches in each peripheral device are used to distinguish between two peripherals of the same type. For instance, if two keyboards of the same type, having the same identifying peripheral type number are connected to the same serial bus, then the switches are set differently. Each switch has two possible positions. Since the four switches on any peripheral device may be set in any of 16 different switch position combinations, the switches may be set to distinguish between as many as 16 peripheral devices of the same type. The actual combination of switch positions on any particular peripheral device is not important as long it does not match that of another peripheral of the same type on the bus. Each PID places a serial number (from 1 to 16 decimal) representing the particular switch settings in an internal register.

On system start up each PID is programmed to initially accept commands or data transmitted with a universal address code. The host computer initiates a "configuration cycle" causing the master controller to transmit a series of "CONFIG" commands to the PIDs with the universal address code. The CONFIG command is thus recognized by all PIDs and each PID counts CONFIG commands received. When the count reaches a poll number related to a unique combination of the the type and serial numbers associated with the PID, the PID transmits a "REQUEST SID" message to the master controller. The REQUEST SID message contains the peripheral type

0173905

number and the switch position code. On receipt of a "REQUEST SID" message, the master PID stops transmitting CONFIG commands, and transmits the peripheral type number and switch position code to the host computer. The host computer then determines a "short identification number" (SID number) to be used as an address code for the peripheral and then issues an "ASSIGN SID" command. The ASSIGN SID command is transmitted over the serial bus by the master controller along with the type number and serial number received in the REQUEST SID message and the SID number.

The PID sending the REQUEST SID message is programmed to respond to an ASSIGN SID command containing its own peripheral type number and serial number and the ASSIGN SID command causes the PID to store the SID number in an internal address register. Thereafter the PID will respond to any incomming message transmitted under that particular SID number and will include that SID number in every outgoing message. The SID number thus becomes that peripheral's unique address until the system is restarted.

After transmitting the ASSIGN SID command, the master controller resumes issuing CONFIG commands until it reaches a preset count limit equal to highest possible poll number associated with any PID. On reaching the count limit the configuration cycle is complete, each peripheral having requested and obtained a unique SID number address. Subsequent communications between host and peripherals may then be transmitted using SID number address codes.

The present invention thus allows the host computer to establish peripheral addresses dynamically after system start up. All peripherals of the same type contain the same ROM and no manual adjustment to peripheral hardware is required to distinguish peri-

pherals unless two peripherals of the same type are connected to the same serial bus. In that case an operator must adjust switch settings in the duplicate peripheral but the exact setting of the switches is not critical so long as the settings do not duplicate the settings of the switches on similar peripherals. Opportunity for operator error is small.

Since all devices of the same type have the same peripheral type number, the host computer can be programmed to recognize the peripheral type during start up when it receives the peripheral type number. Once the host recognizes the peripheral type, it can communicate with the peripheral through preprogrammed, specifically adapted drivers. Thus the present invention not only dynamically addresses the peripherals, it provides a means for the host computer to identify peripheral types automatically.

It is therefore an object of the present invention to provide new and improved method and apparatus for assigning addresses to each peripheral device connected to a single serial bus.

It is a further object of the present invention to provide such new and improved address assigning method and apparatus whereby no change in peripheral device hardware is required to distinguish peripheral devices of differing types.

It is a further object of the present invention to provide such new and improved address assigning method and apparatus whereby only a simple change in peripheral device hardware is required to distinguish peripheral devices of the same type.

It is a still further object of the present invention to provide such new and improved address method and apparatus whereby during system startup a host computer can automatically determine the type of each peripheral connected to a serial bus.

The invention resides in the combination, construction, arrangement and disposition of the various component parts and elements incorporated in the present invention. The present invention will be better understood and objects and important features other than those specifically enumerated above will become apparent when consideration is given to the following details and description, which when taken in conjunction with the annexed drawings describe, disclose, illustrate, and show a preferred embodiment or modification of the present invention and what is presently considered and believed to be the best mode of practicing the principles thereof.

## Description of the Drawings

FIG. 1 is a block diagram depicting a system incorporating the preferred embodiment of the present invention,

FIG. 2 is a flowchart depicting the configuration mode operation of the master interface controller of FIG. 1, and

FIG. 3 is a flowchart depicting the configuration mode operation of the peripheral interface device of FIG. 1.

## Detailed Description of the Preferred Embodiment

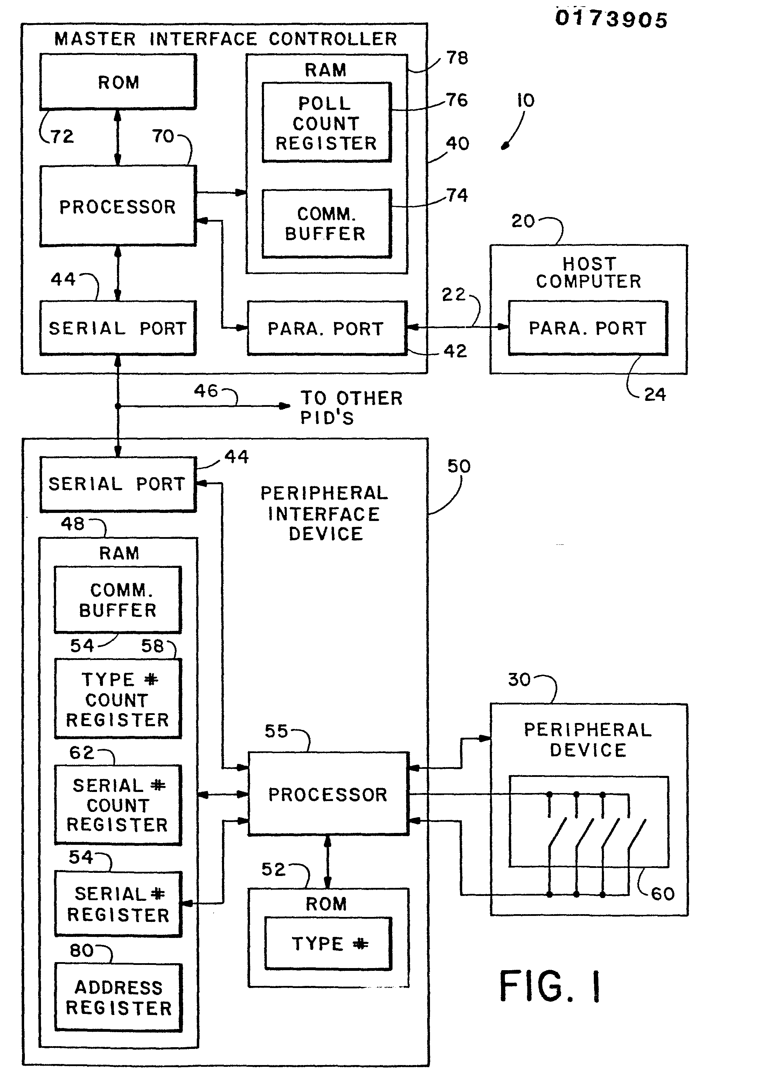

FIG. 1 is a block diagram of a modular input system (MIS) 10 incorporating the present invention for providing a communication link between host computer 20 and one or more peripheral devices 30 such as keyboards, joysticks or digitizers. Modular input system 10 comprises master controller 40, one or more peripheral interface device (PIDs) 50, and one bank of four switches 60 for each PID.

Host computer 20 communicates with master controller 40 through parallel bus 22 coupling bidirectional parallel port 24 in the host computer to parallel port 42 in the master controller. MIS controller 40 and each PID 50 has a serial port 44 all connected to form the serial modular interface bus 46. All information passing between host computer 20 and any peripheral device 50 passes through master controller 40, serial bus 46 and a PID 50.

Each PID 50 contains a read only memory (ROM) 52 which stores a number representing the peripheral type. The peripheral type number stored in, for instance, a keyboard PID will differ from the peripheral type number stored in a joystick PID. However the type number associated with two identical keyboards will be identical.

Switch bank 60, which may be mounted in peripheral device 30, is used to distinguish between two peripheral devices of the same type. For instance, if two keyboards of the same type, having the same identifying peripheral type number are connected to the same serial bus, then the switches in bank 60 are set differently. Each switch in bank 60 has two possible switch positions. Since the four switches in bank 60 on any peripheral device 30 may be set in any of 16 different switch position combinations, the switches may be set to distinguish between as many as 16 peripheral devices of the same type. The actual combination of switch positions on any particular peripheral device 30 is not important as long as the combination of switch positions of one peripheral device does not match that of another peripheral device of the same type. Each PID 50 interrogates the switch positions and places a number (from 0 to 15 decimal) representing the particular switch settings in serial number register 54 which may be contained in random access memory (RAM) 48 accessed by processor 56.

Each PID 50 contains a type number count register 58, a serial number count register 62, address register 80 and a communication buffer 64, all of which may be contained in RAM 48. Processor 56 uses communication buffer 64 to temporarily store data transmitted over bus 46. The registers are explained below.

Master interface controller 40 also has a processor 70 controlled by a program contained in ROM 72, a communication buffer 74 for temporary storage of data transmitted over bus 46, and poll count register 76. Poll count register 76 and buffer 74 may be contained in RAM 78.

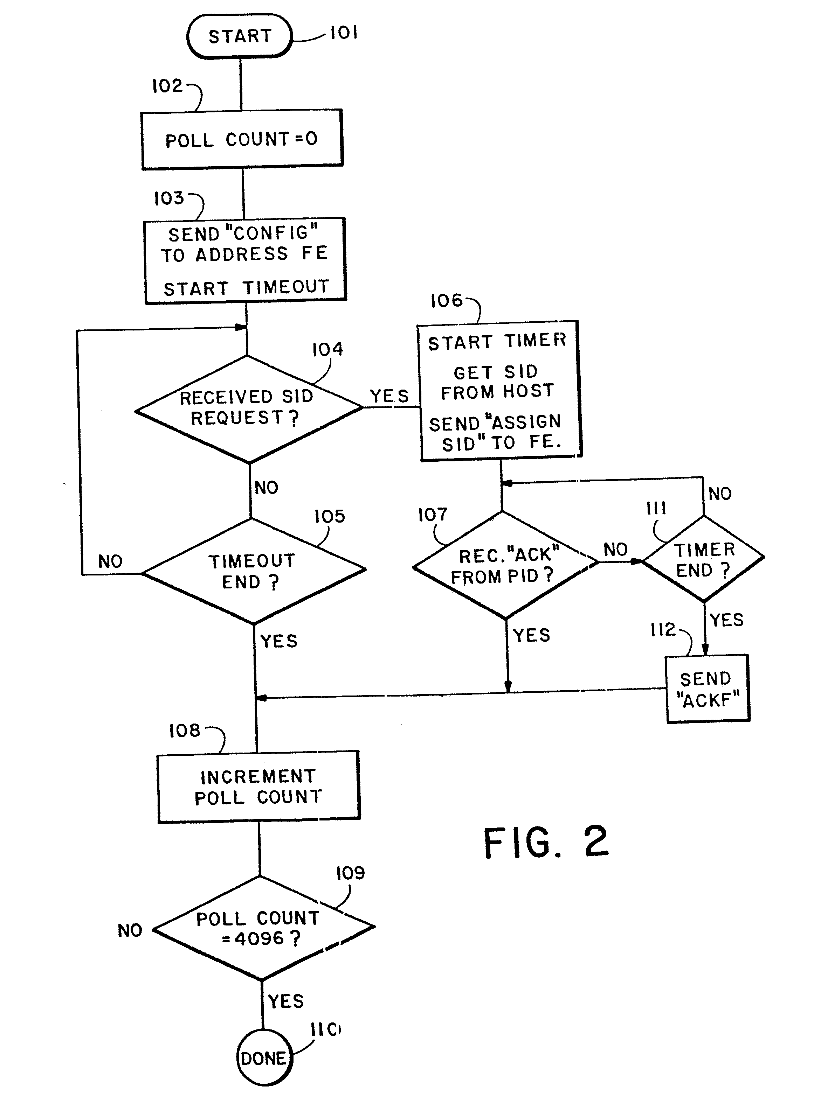

FIG. 2 is a flow chart of a routine contained in ROM 72 for controlling the operation of master interface controller 40 during system configuration following system start up. System configuration begins when controller 40 receives a "CONFIG" command from host computer 20 over bus 22. This occurs during system start up or reset. The purpose of the configuration routine is to allow host computer 20 to assign addresses to each peripheral device 30.

Referring to FIGS. 1 and 2, upon receipt of a CONFIG command from host computer 20 initiating start (block 101 of FIG. 2) of the configuration routine, system controller 40 (in block 102) sets poll count register 76 to zero, transmits a CONFIG command out on bus 46 to all PIDs 50 using universal address "FE" and starts a "TIMEOUT" timer. In blocks 104 and 105 controller 40 waits for for the duration of the TIMOUT timer to see if any PID 50 responds with a "REQUEST SID" message. This indicates that a peripheral device 30 is requesting a "short identification" (SID) number for use as the peripheral device address. If such a request is received from a peripheral device, controller 40, in block 106, obtains the SID number from host computer 20 and retransmits it in an "ASSIGN SID" command addressed to all peripherals using the universal address code FE. The ASSIGN SID command also contains information as explained below allowing the PID that sent the REQUEST SID message to accept the SID number while all other PIDs reject it. The accepting PID then transmits an "ACK" message to the controller 40 acknowledging receipt of the SID number. A second timer started in block 106 allows a set time for receipt of an ACK message. Blocks 107 and 111 form a loop causing controller 40 to wait for an ACK message. If no ACK message is received at the end of the TIMER cycle, controller 40 sends an "ACKF" message to the host informing the host of an acknowledgement failure.

After transmitting the SID number and receiving an ACK message from the receiving PID (block 107), or if no REQUEST SID message is received within the TIMEOUT time (block 105), or after sending an ACKF message to the host (block 112) controller 40, in block 108, increments the number contained in poll count register 76 by one and then, in block 109, checks to see if the stored number equals 4096, the maximum number of peripherals that can be tied to bus 46. After 4096 CONFIG commands have been generated, configuration is complete, block 110. If less than 4096 CONFIG commands have been generated, controller 40 transmits another CONFIG command in block 103 and the cycle begins again.

During system configuration, each PID counts the number of CONFIG commands placed on bus 46 by controller 40, incrementing type number count register 58 once for every 16 CONFIG commands. Serial number count register is incremented once for every CONFIG command but is reset to zero after every sixteen counts. When the count stored in type number count register 58 matches the peripheral type number stored in ROM 58, and when the number stored in serial number count register 62 matches the serial number stored in serial number count register 54, PID 50 transmits a REQUEST SID message to master controller 40 and receives an ASSIGN SID command in return containing the SID number as described above for use as its address code. Since the combination of serial number and type number is unique for each PID, each PID receives a unique SID number. Each PID 50 stores its SID number in address register 80.

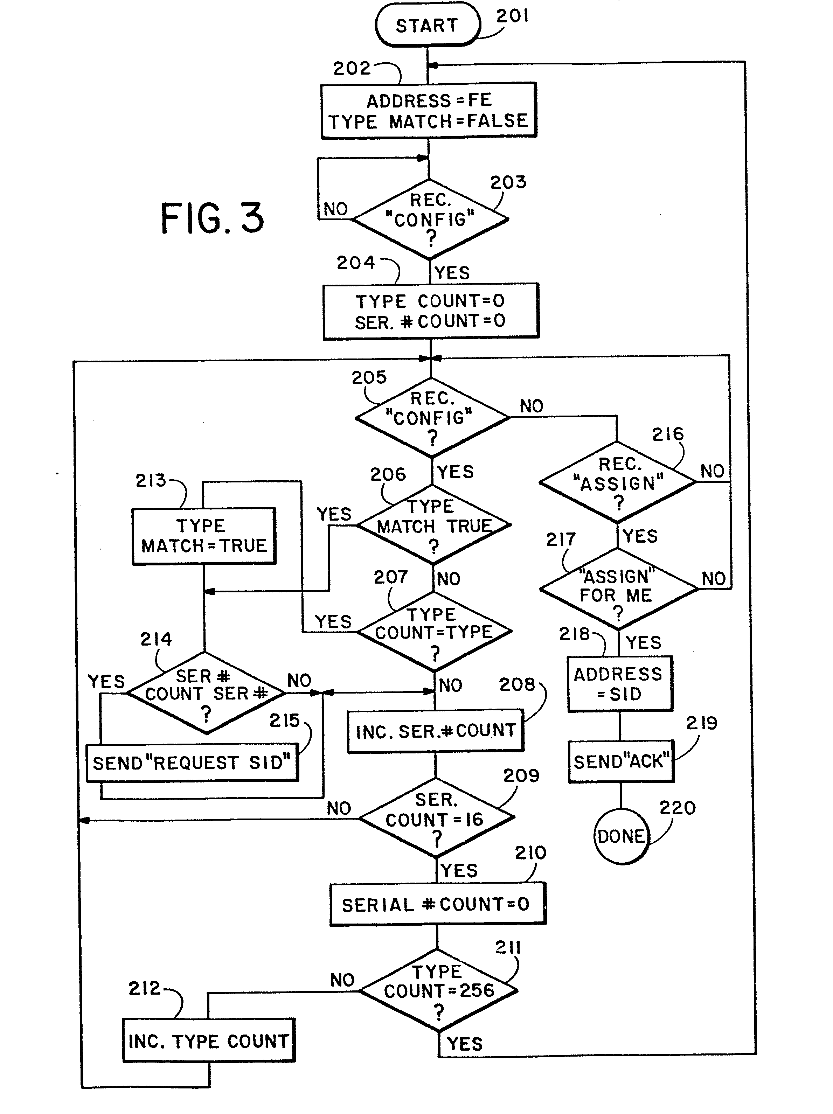

FIG. 3 is a flow chart of a program contained in ROM 52 for controlling the operation of PID 50 during system configuration. Turning now to FIGS. 1 and 3, the PID configuration routine starts at block 201 on system power up. In block 202, each PID 30 loads the hexadecimal number FE into address register 80. Each PID responds to information transmitted over bus 46 when preceeded by the number contained in register 80. Thus after system start-up, every PID 50 responds to messages sent to address FE. Also in block 202, each PID sets a "TYPE MATCH" marker to a logical false condition. This marker is used to indicate whether the CONFIG command count stored in type number count register 58 has reached the type number stored in ROM 50. A logical false condition indicates that a match has not yet occured.

With address FE in register 80 every PID 50 then waits in block 203 for the first CONFIG command transmitted by master controller 40 over bus 46. On receipt of the first CONFIG command, each PID zeros the contents of type number count register 58 and serial
number count register 62 as indicated in block 204.

Each PID 50 then enters into a loop comprising
blocks 205 and 216 wherein the PID continuously checks
for the occurence of a CONFIG command or an ASSIGN SID
command on bus 46.  When PID 50 receives a CONFIG
command from controller 40, it checks in block 206 to
see if the type match marker is true.  If not,  it
increments serial number count register 62.  In block
209, PID 50 checks to see if the count in serial number
count register 62 has reached 16.   If not, PID 50
returns operation to blocks 205 and 216 and waits for
another CONFIG command.  If the count in serial number
count register 62 has reached 16, PID 50 resets the
serial number count to zero in block 210.

In block 211, PID 50 checks to see if the number
contained in type count number register 58 is equal to
256.  The type number count will reach 256 after 4096
CONFIG commands have been received by the PID.  This is
the maximum number to be sent.  In normal operation,
each PID will receive a SID number before 4096 CONFIG
commands have issued.  If the PID has not received a
SID number by the time 4096 CONFIG commands have issued, then there is a configuration error.  At that
point an error message could be generated.  However, in
FIG. 3, in the event of such an error, PID operation is
redirected back to block 202 and the PID retains the
universal address FE following configuration.

Assuming the count stored in type number register
211 has not reached 256 when the configuration routine
reaches block 211, PID 50 increments type number count
register 58 in block 212 and then returns to block 205
to wait for another CONFIG command.

When the count stored in type number count register 58 reaches the peripheral type number stored in ROM 52, block 207 directs PID 50 to block 213 where the type match marker is set to logical true. Thereafter, in 214, PID 50 compares the contents of serial number count register 62 with the peripheral serial number stored in register 54. If there is a match, then PID 50 transmits a REQUEST SID message to controller 40 according to block 215. If there is no match, or after a REQUEST SID message is sent, the serial number count in register 62 is incremented in block 208 and PID 50 is directed back again to the blocks 205 and 216 loop to wait for another CONFIG command or an ASSIGN SID command. On receipt of subsequent CONFIG commands, block 206 will direct PID 50 directly to block 214, bypassing block 213 since the type match marker is already true.

It should be noted that only one PID 50 will send a REQUEST SID command at a time because the combination of type number and serial number is unique for each PID 50. The type number stored in ROM 50 is unique for each peripheral 30 type while the serial number in register 54 is uniquely set to distinguish between peripherals of the same type.

The REQUEST SID message, sent to controller 40 in block 215, contains the type and serial number of the initiating PID 50. Controller 40 passes this number to host computer 20. Host computer 20 may use this type number to identify the peripheral type so that it can later use the proper interface routines when communicating with the peripheral. Host computer 20 determines an appropriate SID number to use for the peripheral address and transmits it back to the PID 50 via an ASSIGN command. The ASSIGN command contains the type and serial number of the PID 50 making the SID request.

All PIDs 50 receive the ASSIGN command but only the requesting PID 50 stores the SID number transmitted in the ASSIGN command in its address register 80. In block 217, PID 50 compares the type and serial number data contained in the ASSIGN SID command with its own stored type and serial numbers. If the numbers do not match, the command is ignored by redirecting PID 50 operation back to block 205 to wait for another CONFIG or ASSIGN command. If the numbers do match, then in block 218, the PID stores the SID number in address register 80 and, in block 219, sends an ACK message to master controller 40 acknowledging acceptance of the SID number and enabling it to resume issuing CONFIG commands. Thereafter, the PID 50 storing the transmitted SID number in register 80 will respond to any message containing its assigned SID number. The configuration routine for any PID having accepted a SID number then ends in block 220.

By the time controller 40 has issued 4096 CONFIG commands, all PIDs 50 will have requested and received a unique SID number. Thereafter the host computer 20 and peripheral devices 30 will occur using the SID number addresses.

In the preferred embodiment master controller 40 and PID 50 comprise Intel model 8744 remote universal peripheral interface microcomputers with ROMs programmed to implement a subset of IBM standard synchronous data link control protocol and to implement the routines charted in FIGS. 2 and 3 during initial configuration. It is understood, however, that the hardware requirements of controller 40 and PID 50 may be implemented by any microprocessor or controller comprising features analogous to those depicted in FIG. 1 and capable of being programmed to carry out the steps charted by FIGS 2 and 3 without departing from the present invention. It is also understood that switch bank 60 could be replaced by a set of removable or cuttable jumpers, or any other method of generating a unique number for storage in serial number register 54 of FIG. 1.

The following is a simplified code listing implementing the flow chart of FIG. 2.

```
10  POLL = O
20  SEND CONFIG TO ADDRESS FE
30  START TIMEOUT
40  IF SID REQUEST RECEIVED THEN GOTO 60
50  IF TIMEOUT LIMIT THEN GOTO 100
60  START TIMER
65  GET SID FROM HOST
70  SEND ASSIGN SID TO ADDRESS FE
80  IF ACKNOWLEDGE RECEIVED GOTO 100
85  IF TIMER LIMIT THEN GOTO 90 ELSE GOTO 80
90  SEND ACKF TO HOST
100 POLL = POLL + 1
110 IF POLL <> 4096 THEN GOTO 20
120 END
```

The following is a simplified code listing implementing the flow chart of FIG. 3.20 .

```
05  ADDRESS = FE
10  TMATCH = O
20  IF CONFIG NOT RECEIVED THEN GOTO 225
30  TCOUNT = O
40  SCOUNT = O
50  IF CONFIG RECEIVED THEN GOTO 90
60  IF ASSIGN NOT RECEIVED THEN GOTO 50
70  IF TYPE = TNUMBER AND SERIAL = SNUMBER THEN
    ADDRESS = SID ELSE GOTO 50
80  END
90  IF TMATCH=1 THEN 120
100 IF TCOUNT <> TYPE THEN 130
```

```
110 TMATCH = 1
120 IF SCOUNT = SERIAL THEN SEND REQUEST SID
130 SCOUNT = SCOUNT + 1
140 IF SCOUNT < 16 GOTO 50
160 SCOUNT = 0
170 IF TCOUNT = 256 THEN GOTO 05
180 TCOUNT = TCOUNT + 1
190 GOTO 50
```

Thus while a preferred embodiment of the present invention has been shown and described, it will be apparent to those skilled in the art that many changes and modifications may be made without departing from the invention in its broader aspects. It is therefore intended that appended claims cover all such changes and modifications as fall within the true spirit and scope of the present invention.

Claims:

1.  For a computer system of the type having a plurality of peripheral devices communicating with a host computer through a common serial bus, a method of uniquely identifying each peripheral device comprising:

storing digital data representing a type number and an adjustable serial number in each peripheral device, type numbers stored by all peripheral devices of the same type being identical, serial numbers stored by peripheral devices of the same type being adjusted to different values such that the combination of stored type and peripheral numbers is unique for each peripheral device.

2.  A method as in claim 1 wherein a type number is stored in a read only memory accessable by an associated peripheral device.

3.  A method as in claim 1 wherein a serial number is adjusted by changing the position of at least one switch.

4.  A method as in claim 1 wherein a serial number is adjusted by selective placement of at least one jumper.

5.  For a computer system of the type having a plurality of peripheral devices communicating with a host computer through a common serial bus, each peripheral device being coupled to the bus by an associated interface device for transmitting and receiving messages accompanied by an address code matching a stored address code, a method for dynamically assigning and storing a unique address code in each interface device following system startup comprising the following steps:

        generating a series of count commands on the bus; and

        causing each interface device to count the count commands occuring on the bus and to obtain from the host computer and store the unique address code when the count reaches a poll number stored by the interface device, each interface device storing a unique poll number.

        6. For a computer system of the type having a plurality of peripheral devices communicating with a host computer through a common serial bus, each peripheral device being coupled to the bus by an associated interface device for transmitting and receiving messages accompanied by an address code matching a stored address code, a method for dynamically assigning and storing a unique address code in each interface device following system startup comprising the following steps:

        storing a type number and an adjustable serial number in each interface device, type numbers associated with all peripheral devices of the same type being identical, serial numbers associated with peripheral devices of the same type being adjusted to different values;

        generating a series of count commands on the bus; and

- 18 -

0173905

causing each interface device to count the count commands occuring on the bus and to obtain from the host computer a unique address code when the count reaches a poll number uniquely determined by a combination of the associated type and serial numbers.

7. For a computer system of the type having a plurality of peripheral devices communicating with a host computer through a common serial bus, each peripheral device being coupled to the bus by an associated interface device for transmitting and receiving messages accompanied by an address code matching a stored address code, a method for dynamically assigning and storing a unique address code in each interface device following system startup comprising the following steps:

storing a type number and an adjustable serial number in each interface device, type numbers associated with all peripheral devices of the same type being identical, serial numbers associated with peripheral devices of the same type being adjusted to different values;

setting the stored address in each interface device to a univeral address code upon system start-up;

transmitting a series of universally addressed count commands on the bus;

causing each interface device to count the count commands occuring on the bus and to transmit an address request message on the bus containing the associated type and serial numbers when the count reaches a poll number uniquely determined by a combination of the associated type and serial numbers;

obtaining a unique address code from the host computer based on the type and serial number contained in the address request message; and

replacing the universal address code stored in each interface device with the unique address code obtained from the host computer, the interface device thereafter using the unique address code in transmitting and receiving messages on the bus.

8. For a computer system of the type having a plurality of peripheral devices communicating with a host computer through a common serial bus, each peripheral device being coupled to the bus by an associated interface device for transmitting and receiving messages accompanied by an address code matching a stored address code, a method for dynamically assigning and storing a unique address code in each interface device following system startup comprising the following steps:

setting the stored address code in each interface device to a universal address code upon system startup;

storing a type number and an adjustable serial number in each interface device, type numbers associated with all peripheral devices of the same type being identical, serial numbers associated with peripheral devices of the same type being adjusted to different values;

transmitting a series of universally addressed count commands on the bus;

causing each interface device to count the count commands occuring on the bus and to transmit an address request message on the bus containing the associated type and serial numbers when the count reaches a poll number uniquely determined by a combination of the associated type and serial numbers;

obtaining a unique address code from the host computer based on the type and serial number contained in the address request message;

transmitting on the bus a universally addressed addressing command containing the type number, the serial number and the unique address code; and

replacing the universal address code stored in each interface device with the unique address code contained in the addressing command when the addressing command contains the stored type and serial numbers, the interface device thereafter using the unique address code in transmitting and receiving messages on the bus.

9. A method as in claim 8 wherein the number of count commands transmitted equals at least the highest possible poll number associated with any interface device.

10. For a computer system of the type having a plurality of peripheral devices communicating with a host computer through a common serial bus, each peripheral device being coupled to the bus by an associated interface device for transmitting and receiving messages accompanied by an address code matching a stored address code, an appparatus for dynamically assigning and storing a unique address code in each interface device following system startup comprising:

means to set the stored address code in each interface device to a universal address code upon system startup;

means to store a type number and an adjustable serial number in each interface device, type numbers associated with all peripheral devices of the same type being identical, serial numbers associated with peripheral devices of the same type being adjusted to different values;

means to transmit a series of universally addressed count commands on the bus;

means associated with each interface device to count the count commands occuring on the bus and to transmit on the bus an address request message containing the associated type and serial numbers when the count reaches a poll number uniquely determined by a combination of the associated type and serial numbers;

means to obtain a unique address code from the host computer based on the type and serial number contained in the address request message;

means to transmit on the bus a universally addressed addressing command containing the type number, the serial number and the unique address code; and

means to replace the universal address code stored in each interface device with the unique address code contained in the addressing command when the addressing command contains the stored type and serial numbers, the interface device thereafter using the unique address code in transmitting and receiving messages on the bus.

11. An apparatus as in claim 10 further comprising a read only memory associated with each interface device for storing the peripheral type number.

12. An apparatus as in claim 10 further comprising at least one switch for adjusting a peripheral serial number.

13. An apparatus as in claim 10 comprising at least one cuttable jumper for adjusting the peripheral serial number.

1\3

0173905

MASTER INTERFACE CONTROLLER

ROM

72  70

PROCESSOR

RAM  78

POLL COUNT REGISTER  76

40  10

COMM. BUFFER  74

44

SERIAL PORT

PARA. PORT  42

22

20

HOST COMPUTER

PARA. PORT

24

46  TO OTHER PID'S

44

SERIAL PORT

48

RAM

COMM. BUFFER

54  58

TYPE # COUNT REGISTER

62

SERIAL # COUNT REGISTER

54

SERIAL # REGISTER

80

ADDRESS REGISTER

50

PERIPHERAL INTERFACE DEVICE

55

PROCESSOR

52

ROM

TYPE #

30

PERIPHERAL DEVICE

60

FIG. I

FIG. 2

0173905

# FIG. 3

START — 201

202 — ADDRESS = FE
TYPE MATCH = FALSE

203 — REC. "CONFIG" ? — NO

204 — TYPE COUNT = 0
SER. # COUNT = 0

205 — REC. "CONFIG" ? — NO

216 — REC. "ASSIGN" ? — NO

206 — TYPE MATCH TRUE ? — YES

217 — "ASSIGN" FOR ME ? — NO

213 — TYPE MATCH = TRUE

207 — TYPE COUNT = TYPE ? — YES

218 — ADDRESS = SID

214 — SER # COUNT SER # ? — YES / NO

208 — INC. SER. # COUNT

219 — SEND "ACK"

215 — SEND "REQUEST SID"

209 — SER. COUNT = 16 ? — NO

220 — DONE

210 — SERIAL # COUNT = 0

211 — TYPE COUNT = 256 ? — NO / YES

212 — INC. TYPE COUNT